(19) Europäisches Patentamt
European Patent Office
Office européen des brevets

(11) EP 0 868 396 B1

(12) # EUROPÄISCHE PATENTSCHRIFT

(45) Veröffentlichungstag und Bekanntmachung des Hinweises auf die Patenterteilung:
**06.10.1999 Patentblatt 1999/40**

(21) Anmeldenummer: **96943914.0**

(22) Anmeldetag: **11.12.1996**

(51) Int. Cl.$^6$: **C01B 15/10**, C01B 15/00

(86) Internationale Anmeldenummer:
**PCT/EP96/05526**

(87) Internationale Veröffentlichungsnummer:
**WO 97/22548 (26.06.1997 Gazette 1997/27)**

(54) **DURCH BESCHICHTUNG STABILISIERTE FESTE PEROXO- UND PEROXY-VERBINDUNGEN**
SOLID PEROXO COMPOUNDS AND PEROXY COMPOUNDS STABILISED BY COATING
COMPOSES PEROXO ET PEROXY STABILISES PAR REVETEMENT

(84) Benannte Vertragsstaaten:
**BE DE ES FR GB IT SE**

(30) Priorität: **18.12.1995 DE 19547055**

(43) Veröffentlichungstag der Anmeldung:
**07.10.1998 Patentblatt 1998/41**

(73) Patentinhaber:
**Solvay Interox GmbH**
**30173 Hannover (DE)**

(72) Erfinder:
- **RÖSLER, Richard**
  **B-1950 Kraainem (BE)**
- **MATHES, Manfred**
  **D-53557 Bad Hönningen (DE)**
- **HECKEN, Gerd**
  **D-53560 Vettelschoss (DE)**

(74) Vertreter: **Gosmann, Martin**
**Solvay Pharmaceuticals GmbH**
**Hans-Böckler-Allee 20**
**30173 Hannover (DE)**

(56) Entgegenhaltungen:
**EP-A- 0 407 189**
**EP-A- 0 573 731**
**WO-A-92/17404**
**DE-A- 2 406 455**
**DE-A- 4 136 172**

- **PATENT ABSTRACTS OF JAPAN vol. 018, no. 134 (C-1176), 4.März 1994 & JP 05 319809 A (CENTRAL GLASS CO LTD), 3.Dezember 1993,**

EP 0 868 396 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Xerox (UK) Business Services
2.16.7/3.6

## Beschreibung

Die Erfindung betrifft die Stabilisierung von festen Peroxo- und Peroxy-Verbindungen, insbesondere von Natriumpercarbonat und Acetylperoxyborat-Verbindungen, durch Unhüllung mit einem Beschichtungsmaterial.

Peroxo- und Peroxy-Verbindungen im Sinne der Erfindung sind anorganische und organische Aktivsauerstoffhaltige Verbindungen, die in verschiedenen Anwendungsbereichen, z. B. in Waschmittelzusammensetzungen oder gegebenenfalls auch in Desinfektionsmittelzusammensetzungen, Verwendung finden. Peroxo-Verbindungen sind demgemäß anorganische Aktivsauerstoff enthaltende Peroxosalze, wie insbesondere z. B. Peroxoborate oder Percarbonate. Feste Peroxy-Verbindungen sind demgemäß organische Aktivsauerstoff enthaltende Verbindungen, wie z. B. organische Persäuren oder diese freisetzende Derivate; eine spezielle Art fester Peroxy-Verbindungen im Rahmen der hier vorliegenden Erfindung sind Acetylperoxyborat-Verbindungen, die weiter unten näher beschrieben werden.

Es ist bekannt, Peroxoverbindungen in pulverförmigen Waschmittelmischungen als bleichende Verbindungen einzusetzen. In den üblichen Haushaltsvollwaschmitteln verwendet man üblicherweise Natriumperborat-Tetrahydrat oder Natriumperborat-Monohydrat als Bleichmittel, da diese Materialien in reinem Waschmittelmedium relativ beständig gegen Zersetzung sind. Immer häufiger wird jedoch auch auf andere Alkalimetallperoxosalze, insbesondere Peroxocarbonat (Percarbonat), zurückgegriffen. Diese Alkalimetallperoxosalze, insbesondere das Percarbonat, sind zwar in reinem, trockenem Zustand beständig, jedoch weisen sie den Nachteil auf, sich in Gegenwart von Feuchtigkeit unter Verlust von Aktivsauerstoff leicht zu zersetzen. Es ist daher notwendig, die Alkalimetallperoxosalze durch Umhüllung mit einer geeigneten Beschichtung gegen Feuchtigkeit von außen zu schützen. Für einen effektiven Schutz des Alkalimetallperoxosalzes ist auf eine möglichst vollständige Umhüllung zu achten. Neben der Beschichtungs- und Schutzfunktion sollten die verwendeten Hüllmaterialien auch zusätzliche Funktionen in anwendungsfertigen Zusammensetzungen, die das beschichtete Alkalimetallperoxosalz enthalten, übernehmen können.

Acetylperoxyborat-Verbindungen sind feste Aktivsauerstoff-haltige Verbindungen auf Basis von Essigsäure und Borsauerstoff-Verbindungen, welche aus der DE 41 36 172 bekannt sind. Diese im folgenden als Acetylperoxyborate bezeichneten Verbindungen zeichnen sich durch ihren in Wasser augenblicklich und direkt freisetzbaren Gehalt an Peressigsäure aus. Peressigsäure zeichnet sich gegenüber rein anorganischen Perverbindungen durch ihre niedrige Wirkungstemperatur und höhere Bleich- und Desinfektionskraft aus. Peressigsäure ist für die Umwelt unbedenklich und zeichnet sich durch eine gute Wasserlöslichkeit aus. Ein Nachteil der Peressigsäure besteht jedoch darin, daß diese bei Raumtemperatur flüssig ist und sich darüber hinaus nur als Lösung von Peressigsäure in Essigsaure, nicht jedoch in reinem Zustand herstellen läßt. Hierdurch werden die Möglichkeiten für einen Einsatz der Peressigsäure als solche eingeschränkt. Acetylperoxyborate überwinden diesen Nachteil. Es sind farblose feste Verbindungen, welche per se bei üblichen Temperaturen eine günstige Aktivsauerstoff-Stabilität besitzen und während der Lagerung und Handhabung chemisch und physikalisch unkritisch sind. Acetylperoxyborate haben jedoch den Nachteil, daß sie in Kontakt mit üblichen basischen Waschmittelbestandteilen eine relativ geringe Lagerstabilität aufweisen und zur vorzeitigen Zersetzung unter Freisetzung von Peressigsäure und damit zu einem Verlust von Aktivsauerstoffgehalt neigen. Es ist daher notwendig, die Acetylperoxyborat-Verbindungen ebenso wie die Alkalimetallperoxosalze mit einer geeigneten Beschichtung gegen Feuchtigkeit zu schützen.

Aufgabe der vorliegenden Erfindung ist es, ein Beschichtungsverfahren für feste Peroxo- und Peroxy-Verbindungen, insbesondere jedoch für Natriumpercarbonat und Acetylperoxyborate, bereitzustellen, durch welches deren Lagerstabilität in Gegenwart von Waschpulverbestandteilen erhöht wird.

Es wurde nun gefunden, daß eine Stabilisierung von festen Peroxo- und Peroxy-Verbindungen, insbesondere von Natriumpercarbonat und den aus der DE 41 36 172 bekannten Acetylperoxyboraten, durch eine Umhüllung mit einem Gemisch aus im wesentlichen a) einer Fettsäure oder vorzugsweise einem Alkalimetall- oder Erdalkalimetallsalz davon und b) einem anionischen Tensid aus der Gruppe längerkettig substituierter Sulfonate und Sulfate erreicht werden kann.

In der deutschen Offenlegungsschrift DE 24 06 455 werden lagerbeständige, leichtlösliche Waschmittelzusätze wie - Bleichaktivatoren, Enzyme, optische Aufheller, Biocide sowie Duftstoffe - beschrieben, die in Form homogener Partikel vorliegen. Die Waschmittelzusätze sind hierbei in einem "Hüllmaterial" eingebettet, welches aus drei Komponenten besteht: A) 20 bis 70 Gew.-% einer Fettsäure oder Fettalkohols mit einem Schmelzpunkt oberhalb 30 °C; B) 10 bis 50 Gew.-% einer wasserlöslichen Verbindung aus der Gruppe der Polyglykole, nichtionischer und anionischer Tenside; C) 1 bis 40 Gew.-% einer in Wasser quellbaren Verbindung aus der Gruppe der nativen und partiell abgebauten Cellulose und Celluloseether. Das Einbetten der Waschmittelzusätze in dem 3-Komponenten-"Hüllmaterial" A-B-C geschieht durch Aufschmelzen der Komponenten A und B, wobei dann die weiteren Bestandteile (Komponente C, Waschmittelzusatz) in der Schmelze dispergiert werden, durch nachfolgendes Versprühen der Schmelze in eine Zerstäubungskammer, worauf die homogene lagerbeständige Partikel des Waschmittelzusatzes erhalten werden.

Die internationale Patentanmeldung WO 92/17404 beschreibt die Beschichtung von Natriumpercarbonat durch Umhüllung mit einem Gemisch aus niedrig und hochschmelzenden Carbonsäuren. Bevorzugt wird ein Gemisch aus technischer Stearinsäure mit einer C8/C10-Fettsäure oder mit Isostearinsäure. Das Fettsäuregemisch wird auf die

Natriumpercarbonat-Partikel in geschmolzener Form aufgebracht.

Gegenstand der Erfindung ist daher ein Verfahren nach Anspruch 1

Ferner sind Gegenstand der vorliegenden Erfindung die durch Umhüllung mit dem vorstehend beschriebenen Beschichtungsmaterial stabilisierten, beschichteten festen Partikel der Peroxo- und Peroxy-Verbindungen, insbesondere des Natriumpercarbonates und der Acetylperoxyborat-Verbindungen.

In einer Variante der Erfindung kommen als zu beschichtende Peroxo-Verbindungen teilchenförmige Alkslimetallperoxosalze in Frage, insbesondere aus der Gruppe Peroxocarbonat (Percarbonat), Peroxopyrophosphat, Peroxotripolyphosphat, Peroxomono- und Peroxodisulfat sowie Peroxoborate. Diese Alkalimetallperoxosalze können nach im Stand der Technik bekannten Verfahren hergestellt und gegebenenfalls granuliert sein. Ein erfindungsgemäß bevorzugt zu beschichtendes Alkalimetallperoxosalz ist das Natriumpercarbonat.

In einer anderen Variante der Erfindung kommen als Peroxy-Verbindungen feste organische Percarbonsäuren und deren Derivate in Frage; bevorzugt sind Acetylperoxyborat-Verbindungen. Als zu beschichtendes Acetylperoxyborat können die in der DE 41 36 172 definierten Verbindungen eingesetzt werden, welche gekennzeichnet sind durch einen Aktivsauerstoff-Gehalt von 2 bis 8 Gew.-% und durch einen beim Lösen der Acetyloxyborat-Verbindung in Wasser freisetzbaren Gehalt an Peressigsäure von wenigstens 10 Gew.-%, vorzugsweise von 10 bis 30 Gew.-%, und an in Wasser freisetzbarem Wasserstoffperoxid von unter 4 Gew.-%. Festes Acetylperoxyborat kann auf die in der DE 41 36 172 beschriebene Weise erhalten werden, indem man a) eine feste Borsauerstoff-Verbindung mit Essigsäure und Wasserstoffperoxid und/oder b) eine feste Borsauerstoff-Verbindung mit einer Lösung von Peressigsäure in Essigsäure und/oder c) eine feste Persauerstoff-haltige Borsauerstoff-Verbindung mit Essigsäure gegebenenfalls unter Zusatz von Acetanhydrid und in den Verfahrensvarianten a) und b) gegebenenfalls unter Zusatz von alkalischem Natriumsalz zu einer viskosen Lösung, Suspension oder Paste umsetzt und das gebildete Acetylperoxyborat durch an sich bekannte Trocknungsverfahren daraus gewinnt. Die derart hergestellten Acetylperoxyborate enthalten Acetylgruppen, Peracetylgruppen und Boratstrukturen

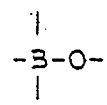

oder

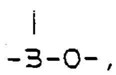

die derart in der Acetylperoxyborat-Verbindung angeordnet sind, daß die oben angegebenen chemischen Charakteristika (Freisetzung von Avox, Peressigsäure und $H_2O_2$) erfüllt sind. Weiterhin zeigen die Acetylperoxyborate z. B. IR-Absorptionsbanden bei etwa 1650 bis 1670 $cm^{-1}$ und bei etwa 1740 bis 1755 $cm^{-1}$; im Festkörper-$^{13}C$-NMR, gemessen gegen Tetramethylsilan (TMS) als externer Standard, wird eine Bande bei 18 bis 19 ppm beobachtet.

Das erfindungsgemäß zur Stabilisierung von Peroxo- und Peroxy-Verbindungen, insbesondere von Natriumpercarbonat und Acetylperoxyborat, eingesetzte Beschichtungsmaterial enthält im wesentlichen ein Gemisch aus einem der vorstehend definierten Salzen der aliphatischen Carbonsäuren und einem der vorstehend definierten anionischen Tenside, vorzugsweise aus der Gruppe der Sulfate.

Als aliphatische Carbonsäuren eignen sich höhere Fettsäuren oder deren Gemische mit Schmelztemperaturen im Bereich von ca. 40 bis ca. 70 °C. Hierzu gehören höhere Fettsäuren, welche 10 bis 22, vorzugsweise 12 bis 18, insbesondere 12 oder 18 Kohlenstoffatome enthalten. Vorzugsweise handelt es sich um Fettsäuren mit geradkettigem, gesättigtem, aliphatischem Rest. Als Beispiel von erfindungsgemäß einsetzbaren Fettsäuren seien Caprinsäure, Laurinsäure, Stearinsäure, Palmitinsäure, Arachinsäure oder Behensäure genannt. Als besonders geeignet erweisen sich Laurinsäure und Stearinsäure; diese liegen bevorzugt in Form ihrer Natriumsalze vor. Es können auch natürlich vorkommende Fettsäuregemische, z. B. Kokosfettsäure oder Talgfettsäure, oder deren Salze für das Beschichtungsmaterial verwendet werden. Die Fettsäuren werden als Alkali- oder Erdalkalimetallsalz eingesetzt; besonders bevorzugt sind die Natriumsalze.

Die erfindungsgemäß einsetzbaren anionischen Tenside umfassen Ammonium-, Alkalimetall- und Erdalkalimetallsalze, vorzugsweise Alkalimetallsalze, insbesondere Natriumsalze, von längerkettigen aliphatischen oder aromatischen Sulfonsäuren oder von durch längerkettige aliphatische Reste monosubstituierten Sulfaten. In den erfindungsgemäß als anionische Tenside eingesetzten Salzen mit den Anionen der Formel I stellt R einen Alkylrest mit 8 bis 18, insbesondere 8 bis 12, Kohlenstoffatomen dar. A kann eine Bindung bedeuten oder für eine gegebenenfalls durch $SO_3^{\ominus}$-Reste oder niederes Alkyl substituierte aromatische Kohlenwasserstoffgruppe mit 6 bis 10 Kohlenstoffatomen, insbesondere eine Phenylgruppe stehen. So kann die R-A-Gruppe bevorzugt eine geradkettige $C_8$-$C_{12}$-Alkyl-

gruppe oder gegebenenfalls eine $C_8$-$C_{12}$-Alkylphenylgruppe darstellen. B kann für eine Bindung oder für Sauerstoff stehen. Die erfindungsgemäß eingesetzten Tenside umfassen somit Alkylsulfate und Alkylsulfonate sowie Alkylarylsulfonate; von letzteren insbesondere Alkylbenzolsulfonate. Zweckmäßige anionische Tenside sind die Alkalimetallsalze von Monoalkylsulfaten oder von aliphatischen und aromatischen Sulfonsäuren, wobei Alkalimetallsalze von Monalkylsulfaten bevorzugt sind. Als besonders zweckmäßig haben sich insbesondere Natriumdodecylsulfat (auch Natriumlaurylsulfat genannt) und auch Natriumdodecylsulfonat (Natriumlaurylsulfonat) erwiesen.

Die Menge an Beschichtungsmaterial beträgt zwechmäßig mindestens 2 vorzugsweise mindestens 3, jedoch nicht mehr als 30 Gew.-% bezogen auf das Gesamtgewicht der beschichteten Partikel. Im Falle von Natriumpercarbonat-Partikeln beträgt demgemäß die Beschichtung 2 bis 20 Gew.-%, vorzugsweise 2 bis 10 Gew.-% und insbesondere 3 bis 6 Gew.-% am Gesamtgewicht der Partikel. Im Falle von Acetylperoxyborat-Partikeln beträgt die Beschichtung demgemäß 2 bis 20 Gew.-%, vorzugsweise 2 bis 10 Gew.-% una insbesondere 3 bis 6 Gew.-% am Gesamtgewicht der Partikel.

Das Verhältnis vom Salz der aliphatischen Carbonsäure zu anionischem Tensid in dem Beschichtungsmaterial kann je nach Art der eingesetzten Säure bzw. deren Salz und des eingesetzten Tensides variieren. Im allgemeinen erweist sich ein Gewichtsverhältnis von aliphatischer Carbonsäure oder deren Salz zu anionischem Tensid von 1:4 bis 4:1, vorzugsweise 1:2 bis 2:1, insbesondere 1:1,5 bis 1,5:1 als zweckmäßig. Beispielsweise liegt bei Verwendung eines Gemisches aus Stearinsäure (Natriumsalz) und Natriumdodecylsulfat zweckmäßig ein Gewichtsverhältnis von Stearinsäure (Natriumsalz) zu Natriumdodecylsulfat von in etwa 1:1 vor.

Die erfindungsgemäß beschichteten, teilchenförmigen Peroxo- und Peroxy-Verbindungen bestehen aus einem Kern, der im wesentlichen aus einem Alkalimetallperoxosalz oder einem Acetylperoxyborat besteht, und aus einer dem Kern umgebenden Hüllschicht, die als Hüllmaterial einen wesentlichen Anteil am Gemisch aus Alkalimetall- oder Erdalkalimetallsalz der Fettsäure und aus dem erfindungsgemäß ausgewählten anionischen Tensid enthält; gegebenenfalls kann die Hüllschicht daneben auch einen gewissen Anteil an anderen üblichen Beschichtungsmaterialien und/oder bei der Alkalimetallperoxosalz- bzw. Acetylperoxyborat-Herstellung üblichen Hilfsstoffen enthalten.

In einer zweckmäßigen Variante der Erfindung enthält die erfindungsgemäße Hüllschicht das Gemisch aus Fettsäuresalz und aus dem anionischen Tensid in einer Menge von wenigstens 60 Gew.-%, vorzugsweise von wenigstens 70 Gew.-% (bezogen auf das Gesamtgewicht der Hüllschicht).

Gegebenenfalls kann das Beschichtungsmaterial neben den vorstehend beschriebenen Hüllmaterialien gemäß der Erfindung noch einen geringen Anteil an anderen, üblichen Hüllmaterialien und/oder weitere bei der Alkalimetallperoxosalz-bzw. Acetylperoxyborat-Herstellung übliche Hilfsstoffe enthalten. Der Anteil an derartigen anderen Hüllmaterialien und Hilfsstoffen sollte höchstens bis zu 40 Gew.-%, vorzugsweise höchstens bis zu 30 Gew.-%, bezogen auf das Gesamtbeschichtungsmaterial betragen. Das heißt, er kann zwischen 0 und einschließlich 40 Gew.-%, vorzugsweise zwischen 0 und einschließlich 30 Gew.-%, des Beschichtungsmaterials liegen. Zu den z. B. bei der Natriumpercarbonat- oder Acetylperoxyborat-Herstellung etc. üblichen Hilfsstoffen, welche in dem erfindungsgemäßen Beschichtungsmaterial vorliegen können, zählen beispielsweise Natriumpolyphosphate, insbesondere Natriumhexametaphosphat, welche beispielsweise in Mengen von 0 bis 10 Gew.-% bezogen auf Beschichtungsmaterial vorliegen können; Natriumpolycarboxylate, insbesondere Natriumsalze von Acrylsäurepolymerisaten wie Acrylsäurehomopolymerisaten oder Acrylsäure/Maleinsäurecopolymerisaten mit molaren Massen im Bereich von 2.500 bis 100.000, insbesondere Natriumpolyacrylate, welche in Mengen von 0 bis 10 Gew.-% bezogen auf Beschichtungsmaterial vorliegen können; Natriumsilikate, vorzugsweise Wasserglas (WG) mit einem Verhältnis $SiO_2$:$Na_2O$ von 3,5:1 bis 2:1, welche in Mengen von 0 bis 35 Gew.-% bezogen auf Beschichtungsmaterial vorliegen können; Phosphonsäuren, insbesondere gegebenenfalls durch Hydrory substituierte Niederalkanmono- oder -diphosphonsäuren wie z. B. 1-Hydroxyethan-1,1-diphosphonsäure, oder deren Salze, welche bei-spielsweise in Mengen von 0 bis 35 Gew.-% bezogen auf das Beschichtungsmaterial vorliegen können; und wasserlösliche Magnesiumsalze, insbesondere Magnesiumsulfat, welche in Mengen von 0 bis 10 Gew.-% bezogen auf das Beschichtungsmaterial vorliegen können. Außer den hier genannten Hilfsmitteln können selbstverständlich auch alle sonst für die Herstellung von Alkalimetallperoxosalzen und insbesondere von Natriumpercarbonat bekannterweise einsetzbaren Hilfsstoffe in dem Beschichtungsmaterial in einer Menge zugegen sein, daß die Gesamtmenge an Hüllmaterialien und Hilfsstoffen 40 Gew.-%, vorzugsweise 30 Gew.-%, bezogen auf die Gesamtbeschichtung nicht übersteigt.

Die Beschichtung der Partikel von Peroxo- und Peroxy-Verbindungen, insbesondere der Natriumpercarbonat-Partikel und Acetylperoxyborat-Partikel, mit dem erfindungsgemäßen Beschichtungsmaterial kann auf an sich bekannte Weise erfolgen. Zweckmäßig werden z. B. die Natriumpercarbonat-Partikel bzw. die festen Acetylperoxyborat-Partikel zur Umhüllung mit dem Beschichtungsmaterial mit einer wäßrigen Lösung oder Suspension des Beschichtungsmaterials behandelt und getrocknet. In an sich bekannter Weise wird die wäßrige Beschichtungslösung oder -suspension in einem mit Warmluft durchströmten Trockner auf die Partikel aufgesprüht, wobei gleichzeitig eine Trocknung stattfindet. Die Temperatur der wäßrigen Beschichtungslösung oder -Suspension kann in Abhängigkeit von deren Feststoffgehalt variieren und liegt zweckmäßig in Bereichen zwischen Raumtemperatur und 60 °C. Die Temperatur in dem Trockner wird zweckmäßig so eingestellt, daß z. B. eine Ablufttemperatur im Bereich von 60 bis 80 °C eingehalten

wird. Die Beschichtung kann auch in einem Pflugscharmischer oder in einem Ringschichtmischer aufgebracht werden und die so erhaltenen feuchten Partikel dann einer Trocknung zugeführt werden.

Die wäßrige Beschichtungslösung oder -Suspension kann die Salze der aliphatischen Carbonsäure in Mengen von 5 bis 30 Gew.-% enthalten. Der Tensidgehalt in der Beschichtungslösung oder -suspension beträgt im allgemeinen 5 bis 30 Gew.-%.

Die erfindungsgemäß beschichteten Alkalimetallperoxosalz-Partikel, vorzugsweise Natriumpercarbonat-Partikel, und Acetylperoxyborat-Partikel weisen bei der Lagerung im Gemisch mit üblichen Waschmittelbestandteilen eine gute Stabilität auf.

Die nachfolgenden Beispiele sollen die Erfindung näher erläutern, ohne jedoch ihren Umfang zu beschränken.

Es bedeuten: U/min. = Umdrehung pro Minute; min. = Minute; RT = Raum- bzw. Umgebungstemperatur; % = Gew.-%; h = Stunde; vac. = Vakuum; NaOH = Natriumhydroxid; Avox = Aktivsauerstoffgehalt; LKB = Wärmeflußmessungen; PCS = Natriumpercarbonat; Turpinal SL = wäßrige 60 Gew.-% Lösung von 1-Hydroxyethan-1,1-diphosphonsäure (= HEDP); SS = Natriumstearat; SLS = Natriumlaurylsulfat (= Natriumdodecylsulfat); WG = Wasserglas.

**Beispiel 1:**

Zur Herstellung von Mustermengen erfindungsgemäß beschichteter PCS-Teilchen wurde nach folgendem Verfahren gearbeitet:

Eine abgewogene Menge von 2 bis 2,5 kg Natriumpercarbonat wurde in einen Lödige-Mischer gefüllt und die Mischerwelle auf eine Drehzahl von etwa 200 U/min. eingestellt. Dann wurde die für den jeweiligen Beschichtungsgrad (b) berechnete Menge (c) des Beschichtungsmittels (Coating-Mittel = Hüllmaterialien in Wasser vollständig klar gelöst) gleichmäßig innerhalb 1 min. über einen Tropftrichter in den Mischer dosiert. Nach Zugabe des Beschichtungsmittels wurde noch etwa 1 min. nachgemischt. Anschließend wurde das feuchte Produkt dem Mischer entnommen und im Glatt-Wirbelbetttrockner mit einer Zulufttemperatur von 95 bis 120 °C und einer Ablufttemperatur bis 80 °C getrocknet. Die Zuluftmenge wurde dabei so einreguliert, daß ein geringer Unterdruck im Trockner vorhanden war und gleichzeitig eine völlige Durchwirbelung des Produktes erreicht wurde. Sobald die Ablufttemperatur von 80 °C erreicht war, wurde das Produkt aus dem Trockner entnommen und an der Luft auf RT abgekühlt.

Berechnung von Beschichtungsgrad (b), Menge des erforderlichen Beschichtungsmittels (c) und der Feuchte (d) nach Zugabe des Beschichtungsmittels sowie Menge des aufzutragenden Hüllmaterials (= Feststoff, a):

$$b[\%] = \frac{a[g] * 100}{e[g]} \qquad c[g] = \frac{a[g] * 100}{g[\%]}$$

$$d[\%] = \frac{c[g] * (100-g[\%])}{c[g] + f[g]} \qquad a[g] = \frac{b[\%] * 1000}{100 - b[\%]}$$

Darin bedeuten:

a = Hüllschicht = aufzutragender Feststoff [g]
b = Beschichtungsgrad [%] = prozentualer Anteil der Hüllschicht (Gesamtstoffgehalt) im Endprodukt
c = aufzubringendes Beschichtungsmittel [g] (= Coatinglösung)
d = Feuchte [%] = prozentualer Wasseranteil im Produkt nach Zugabe der Coatinglösung
e = beschichtetes Natriumpercarbonat [g] = PCS + Hüllschicht
f = Natriumpercarbonat, Ausgangsprodukt [g]
g = Feststoffgehalt [%] der Coatinglösung

Als Coatinglösung wurde eine wäßrige Lösung oder Suspension eingesetzt, die auf 1.000 g Lösung bzw. Suspension aus den in Tabelle I angegebenen Mengen an Fettsäuresalz, Tensid und gegebenenfalls den weiteren Hüllmaterialien bzw. Hilfsstoffen sowie Rest Wasser bestand (Versuche Nr. 1 bis 6). Der mittlere Korndurchmesser des eingesetzten PCS betrug in etwa 400 bis 500 µm. Man erhielt nach dem vorstehenden Verfahren beschichtete PCS-Teilchen mit den in Tabelle I angegebenen Eigenschaften.

**Beispiel 2:**

Stabilitätsuntersuchung an PCS

An den im vorstehenden Beispiel hergestellten, erfindungsgemäß beschichteten Natriumpercarbonat-Produkten wurden zur Beurteilung der Lagerfähigkeit und der Stabilitätseigenschaften Wärmefluß-Messungen ("LKB"-Messungen) durchgeführt. Bei diesen Wärmefluß-Messungen geben die bei isothermen Meßbedingungen auftretenden Wärmeflüsse Hinweise auf die Stabilität des aktivsauerstoffhaltigen Produktes; insbesondere läßt sich auch die Stabilität des Produktes in Gegenwart von Waschmittelbestandteilen ermitteln, wenn die Wärmefluß-Messungen an Proben vorgenommen werden, in denen das aktivsauerstoffhaltige Produkt mit den Waschmittelbestandteilen gemischt vorliegt. Für die hier durchgeführten Wärmefluß-Messungen wurden daher die erfindungsgemäß beschichteten PCS-Produkte in einer solchen Menge in eine Waschmittelbasis eingebracht, daß der Aktivsauerstoffgehalt 2 % betrug. Die verwendete Waschmittelbasis war ein aktivsauerstofffreies Standardwaschmittel auf Zeolithbasis, welches als Bestandteile in üblichen Mengen Zeolith, lineare Alkylsulfonate, Seife, Carboxymethylcellulose, Soda und optische Aufheller enthielt. Die Wärmefluß-Messungen an diesen Proben wurden in einem LKB 2277 Bio Activity Monitor bei 40 °C über einen Zeitraum von 20 h durchgeführt.

Je niedriger der gemessene Wärmefluß, desto höher ist die Stabilität des aktivsauerstoffhaltigen Produktes in der Waschmittelbasis, bzw. umso vorteilhafter ist die jeweilige Beschichtung der beschichteten PCS-Teilchen. Die Ergebnisse sind in Tabelle I angegeben; ungecoatetes PCS weist zum Vergleich in etwa LKB-Werte von 45 bis 60 µW/g auf.

**Beispiel 3:**

Bestimmung des Löseverhaltens

Die in den Beispielen angegebenen Lösegeschwindigkeiten in Wasser wurden auf an sich bekannte Weise bestimmt in einem 2 l-Behälter, welcher mit einem Edelstahl-Rührer ausgerüstet ist, welcher einen Schaft mit 2 vertikalen Rührflügeln von 42 mm Länge und 11 mm Höhe und einen Motor mit einer Drehleistung von 350 U/min besitzt und dessen Schaft an der Befestigung zum Motor mit Polyethylen isoliert ist. Für die Bestimmung wurden 2 g Substanz in 1 l demineralisiertes Wasser von 15 °C gegeben und gerührt. Die Menge an gelöster Substanz wurde durch Leitfähigkeitsmessung in der Lösung bestimmt. Die Ergebnisse sind in Tabelle I angegeben.

**Beispiel 4:**

Beschichtung von Acetylperoxyborat-Partikeln

a) Für die Coatingversuche wurde ein Acetylperoxyborat eingesetzt, das wie folgt charakterisiert war (Durchschnittswerte):

| | |
|---|---|
| 23 Gew.-% | in Wasser freisetzbare Peressigsäure; |
| 0,1 Gew.-% | in Wasser freisetzbares $H_2O_2$; (jeweils manuelle Titration) |
| 23,2 Gew.-% | Peressigsäure-Gehalt; |
| 9,3 Gew.-% | Natrium-Gehalt; |
| 9,6 Gew.-% | Bor-Gehalt; |
| 28,6 Gew.-% | Essigsäure-Gehalt; (jeweils Titration im Titrator) |

LKB-Stabilitätsmessung (siehe Beispiel 5) in Waschmittelbasis (0,13 g Acetylperoxyborat, 0,87 g Waschmittelbasis): 273 µW/g.

b) Das Coaten von Acetylperoxyborat erfolgte im wesentlichen analog zum Coaten von PCS (siehe Beispiel 1).

In einem Lödige-Mischer wurden 1,5 kg des vorstehend beschriebenen Acetylperoxyborates mit 251 g Coatinglösung (vorher auf 50 - 60 °C erwärmt) vermischt. Die Coatinglösung wies dabei folgende Zusammensetzung auf:

| | |
|---|---|
| 125 g/kg | Natriumstearat, |
| 125 g/kg | Natriumlaurylsulfat. |

Das durch Mischung erhaltene, zur Agglomeratbildung neigende feuchte Produkt wurde in einen Glatt-Wirbelbetttrockner überführt und bei einer Zulufttemperatur von 90 °C bis 100 °C und einer Ablufttemperatur bis 80 °C getrocknet. Das aus dem Trockner entnommene, abgekühlte Produkt wies folgende Eigenschaften auf (Durchschnittswerte):

| | | |
|---|---|---|
| - Beschichtungsgrad: | 4 Gew.-% | |
| - Korngrößen-Anteil: | > 2000 μm | 50 Gew.-% |
| - Korngrößen-Anteil: | 250 - 2000 μm | 50 Gew.-% |

mit folgenden Eigenschaften:

| | |
|---|---|
| 21,4 Gew.-% | in Wasser freisetzbare Peressigsäure; |
| 0,2 Gew.-% | in Wasser freisetzbares $H_2O_2$; (jeweils manuelle Titration) |
| 22,7 Gew.-% | Peressigsäure |
| 9,3 Gew.-% | Natrium |
| 9,6 Gew.-% | Bor |
| 28,6 Gew.-% | Essigsäure |

LKB-Stabilitätsmessung (siehe Beispiel 5) in Waschmittelbasis (0,14 g Acetylperoxyborat, 0,86 g Waschmittelbasis): 89 μW/g.

c) Analog zum vorstehenden Versuch b) und Beispiel 1 wurden 1,5 kg des unter a) beschriebenen Acetylperoxyborates mit 213 g der wie folgt zusammengesetzten Coatinglösung vermischt.

| | |
|---|---|
| 109 g/kg | Natriumstearat; |
| 109 g/kg | Natriumlaurylsulfat; |
| 76 g/kg | Turpinal SL: |

Das durch Mischung erhaltene, zur Agglomeratbildung neigende feuchte Produkt wurde in einen Glatt-Wirbelbetttrockner überführt und bei einer Zulufttemperatur von 90 °C bis 100 °C und einer Ablufttemperatur bis 80 °C getrocknet. Das aus dem Trockner entnommene, abgekühlte Produkt wies folgende Eigenschaften auf (Durchschnittswerte):

| | | |
|---|---|---|
| - Beschichtungsgrad: | 4 Gew.-% | |
| - Korngrößen-Anteil: | > 2000 μm | 30 Gew.-% |
| - Korngrößen-Anteil: | 250 - 2000 μm | 70 Gew.-% |

mit folgenden Eigenschaften:

| | |
|---|---|
| 21,6 Gew.-% | in Wasser freisetzbarer Peressigsäure; |
| 0,2 Gew.-% | in Wasser freisetzbares $H_2O_2$; (jeweils manuelle Titration) |
| 23,4 Gew.-% | Peressigsäure-Gehalt; |
| 9,2 Gew.-% | Natrium-Gehalt; |
| 9,7 Gew.-% | Bor-Gehalt; |
| 26,3 Gew.-% | Essigsäure-Gehalt; (jeweils Titration im Titrator) |

LKB-Stabilitätsmessung (siehe Beispiel 5) in Waschmittelbasis (0,139 g Acetylperoxyborat, 0,861 g Waschmittelbasis): 92 μW/g.

**Beispiel 5:**

Stabilitätsuntersuchung an Acetylperoxyborat

Zur Untersuchung der Stabilität der beschichteten Acetylperoxyborat-Partikel in Gegenwart von Waschmittelinhaltsstoffen wurden die im vorstehenden Beispiel 4 hergestellten beschichteten Acetylperoxyborat-Partikel sowie zum Vergleich auch unbeschichtete Acetylperoxyborat-Partikel jeweils in ein Basispulver eines handelsüblichen zeolithhaltigen Kompaktwaschmittels in einer Menge entprechend 3 Gew.-% freisetzbarer Peressigsäure (bezogen auf die resultierende Gesamtmischung) analog zu Beispiel 2 eingebracht. Anschließend wurde für diese Gesamtmischung bei 40 °C die mit Aktivsauerstoffverlust einhergehende zersetzung des Acetylperoxyborates durch Messung des damit verbundenen Wärmeflusses (µW/g) in einem Mikrokalorimeter analog zu Beispiel 2 bestimmt. Ein hoher Wärmefluß entspricht hierbei einer hohen Zersetzungsrate. Die Ergebnisse sind in Beispiel 4 angegeben.

Die ermittelten Ergebnisse zeigen, daß die erfindungsgemäß beschichteten Acetylperoxyborat-Partikel eine wesentlich günstigere Stabilität aufweisen als die unbeschichteten Partikel.

Tabelle I: Fortsetzung

| Versuch Nr. | 4 | 5 | 6 |
|---|---|---|---|
| Coatinglösung | 90 g/kg Natriumstearat<br>210 g/kg Natriumdodecylsulfat (Natriumlaurylsulfat) | 101 g/kg Natriumstearat<br>101 g/kg Natriumdodecylsulfat (Natriumlaurylsulfat)<br>15,2 g/kg $Na_2O$<br>52,0 g/kg $SiO_2$ | 109 g/kg Natriumstearat<br>109 g/kg Natriumdodecylsulfat (Natriumlaurylsulfat)<br>76 g/kg Turpinal SL (100 %ig) |
| Coatinglevel | 4 % | 4 %<br>(3 % SS/SLS + 1 % WG3.5R) | 4 % |
| Trocknung | bis 80 °C Abluft | bis 80 °C Abluft | bis 80 °C Abluft |
| Avoxgehalt | 13,8 % | 13,8 % | 13,8 % |
| Siebung > 1000 µm | 1,7 % | 1,0 % | 1,4 % |
| > 850 µm | 2,8 % | 2,1 % | 3,9 % |
| > 600 µm | 20,8 % | 20,0 % | 23,3 % |
| > 420 µm | 41,0 % | 41,4 % | 41,6 % |
| > 150 µm | 33,7 % | 35,5 % | 29,8 % |
| < 150 µm | 0,0 % | 0,0 % | 0,0 % |
| Mittlerer Korndurchmesser | --- | --- | --- |
| LKB ohne Basis | 2,9 µW/g | 0,9 µW/g | 7,2 µW/g |
| + Waschmittel-Basis | 7,8 µW/G | 11,9 µW/g | 7,2 µW/g |
| Lösegeschwindigkeit 350 U/Min. 15 °C | | | |
| nach 1 Min. | 69 % | 54 % | 76 % |
| nach 2 Min. | 90 % | 79 % | 95 % |
| nach 3 Min. | 97 % | 92 % | 99 % |

Tabelle I: Fortsetzung

| Versuch Nr. | 4 | 5 | 6 |
|---|---|---|---|
| Coatinglösung | 90 g/kg Natriumstearat<br>210 g/kg Natriumdodecylsulfat (Natriumlaurylsulfat) | 101 g/kg Natriumstearat<br>101 g/kg Natriumdodecylsulfat (Natriumlaurylsulfat)<br>15,2 g/kg $Na_2O$<br>52,0 g/kg $SiO_2$ | 109 g/kg Natriumstearat<br>109 g/kg Natriumdodecylsulfat (Natriumlaurylsulfat)<br>76 g/kg Turpinal SL (100 %ig) |
| Coatinglevel | 4 % | 4 %<br>(3 % SS/SLS + 1 % WG3.5R) | 4 % |
| Trocknung | bis 80 °C Abluft | bis 80 °C Abluft | bis 80 °C Abluft |
| Avoxgehalt | 13,8 % | 13,8 % | 13,8 % |
| Siebung > 1000 µm | 1,7 % | 1,0 % | 1,4 % |
| > 850 µm | 2,8 % | 2,1 % | 3,9 % |
| > 600 µm | 20,8 % | 20,0 % | 23,3 % |
| > 420 µm | 41,0 % | 41,4 % | 41,6 % |
| > 150 µm | 33,7 % | 35,5 % | 29,8 % |
| < 150 µm | 0,0 % | 0,0 % | 0,0 % |
| Mittlerer Korndurchmesser | --- | --- | --- |
| LKB ohne Basis | 2,9 µW/g | 0,9 µW/g | 7,2 µW/g |
| + Waschmittel-Basis | 7,8 µW/G | 11,9 µW/g | 7,2 µW/g |
| Lösegeschwindigkeit 350 U/Min. 15 °C | | | |
| nach 1 Min. | 69 % | 54 % | 76 % |
| nach 2 Min. | 90 % | 79 % | 95 % |
| nach 3 Min. | 97 % | 92 % | 99 % |

## Patentansprüche

1. Verfahren zur Stabilisierung von festen Peroxo- und Peroxy-Verbindungen, dadurch gekennzeichnet, daß feste

Partikel der Peroxo- und Peroxy-Verbindungen, insbesondere feste Partikel von Natriumpercarbonat oder von Acetylperoxyborat-Verbindungen, durch Aufsprühen einer wässrigen Lösung oder Suspension eines Beschichtungsmaterials und Trocknung umhüllt werden,
wobei das Beschichtungsmaterial
zu wenigstens 60 Gew.-% aus einem Gemisch von a) einem Alkali- oder Erdalkalimetallsalz einer aliphatischen Carbonsäure mit 10 bis 22 Kohlenstoffatomen mit b) einem Alkali- oder Erdalkalimetallsalz eines anionischen Tensids in einem Gewichtsverhältnis von a) zu b) im Gemisch von 1:4 bis 4:1, worin das Anion des Tensids der allgemeinen Formel I genügt,

$$R\text{-}A\text{-}B\text{-}SO_3^- \qquad I$$

worin

- A für eine Bindung oder eine gegebenenfalls durch $SO_3^-$-Reste oder niederes Alkyl substituierte aromatische Kohlenwasserstoffgruppe mit 6 bis 10 Kohlenstoffatomen steht,
- B für eine Bindung oder Sauerstoff steht, und
- R einen Alkylrest mit 8 bis 18 Kohlenstoffatomen bedeutet,

und gewünschtenfalls bis zu höchstens 40 Gew.-% aus anderen, üblichen Beschichtungsmaterialien und/oder bei der Alkalimetallperoxosalz- bzw. Acetylperoxyborat-Herstellung üblichen Hilfsstoffen, die aus der Gruppe Natriumpolyphosphate, Natriumpolycarboxylate, Natriumsilikate, Phosphonsäuren und wasserlösliche Magnesiumsalze ausgewählt sind,
besteht.

**2.** Verfahren nach Anspruch 1, dadurch gekennzeichnet, daß die aliphatische Carbonsäure eine Fettsäure mit 12 bis 18, vorzugsweise mit 12 oder 18 Kohlenstoffatomen ist.

**3.** Verfahren nach Anspruch 2, dadurch gekennzeichnet, daß die aliphatische Carbonsäure Laurinsäure oder Stearinsäure ist und vorzugsweise in Form des Natriumsalzes vorliegt.

**4.** Verfahren nach einem der vorstehenden Ansprüche, dadurch gekennzeichnet, daß das anionische Tensid ein Alkalimetallsalz eines Monoalkylsulfates oder einer aliphatischen oder aromatischen Sulfonsäure, vorzugsweise ein Alkalimetallsalz eines Monoalkylsulfates, ist.

**5.** Verfahren nach Anspruch 4, dadurch gekennzeichnet, daß das anionische Tensid Natriumdodecylsulfat ist.

**6.** Verfahren nach einem der vorstehenden Ansprüche, dadurch gekennzeichnet, daß das Beschichtungsmaterial mindestens 2, vorzugsweise mindestens 3 Gew.-% bezogen auf das Gesamtgewicht der umhüllten Partikel beträgt.

**7.** Verfahren nach einem der vorstehenden Ansprüche, dadurch gekennzeichnet, daß in dem Beschichtungsmaterial ein Gewichtsverhältnis von a) dem Alkali- oder Erdalkalimetallsalz der aliphatischen Carbonsäure zu b) dem Alkalioder Erdalkalimetallsalz des anionischen Tensids von 1:2 bis 2:1, vorzugsweise von 1:1,5 bis 1,5:1, vorliegt.

**8.** Stabilisierte Partikel von festen Peroxo- und Peroxy-Verbindungen, dadurch gekennzeichnet, daß die festen Partikel von Peroxo- und Peroxy-Verbindungen, insbesondere feste Partikel von Natriumpercarbonat oder von Acetylperoxyborat-Verbindungen, mit einem Beschichtungsmaterial umhüllt sind, welches zu wenigstens 60 Gew.-% aus einem Gemisch von a) einem Alkali- oder Erdalkalimetallsalz einer aliphatischen Carbonsäure mit 10 bis 22 Kohlenstoffatomen mit b) einem Alkali- oder Erdalkalimetallsalz eines anionischen Tensids in einem Gewichtsverhältnis von a) zu b) im Gemisch von 1:4 bis 4:1, worin das Anion des Tensids der allgemeinen Formel I genügt,

$$R\text{-}A\text{-}B\text{-}SO_3^- \qquad I$$

worin

- A für eine Bindung oder eine gegebenenfalls durch $SO_3^-$-Reste oder niederes Alkyl substituierte aromatische Kohlenwasserstoffgruppe mit 6 bis 10 Kohlenstoffatomen steht,
- B für eine Bindung oder Sauerstoff steht, und

R einen Alkylrest mit 8 bis 18 Kohlenstoffatomen bedeutet,

und gewünschtenfalls bis zu höchstens 40 Gew.-% aus anderen, üblichen Beschichtungsmaterialien und/oder bei der Alkalimetallperoxosalz- bzw. Acetylperoxyborat-Herstellung üblichen Hilfsstoffen, die aus der Gruppe Natriumpolyphosphate, Natriumpolycarboxylate, Natriumsilikate, Phosphonsäuren und wasserlösliche Magnesiumsalze ausgewählt sind,
besteht.

**9.** Stabilisierte Partikel nach Anspruch 8, dadurch gekennzeichnet, daß die aliphatische Carbonsäure eine Fettsäure mit 12 bis 18, vorzugsweise mit 12 oder 18 Kohlenstoffatomen, ist.

**10.** Stabilisierte Partikel nach Anspruch 9, dadurch gekennzeichnet, daß die aliphatische Carbonsäure Laurinsäure oder Stearinsäure ist und vorzugsweise in Form des Natriumsalzes vorliegt.

**11.** Stabilisierte Partikel nach Ansprüchen 8 bis 10, dadurch gekennzeichnet, daß das anionische Tensid ein Alkalimetallsalz eines Monoalkylsulfates oder einer aliphatischen oder aromatischen Sulfonsäure, vorzugsweise ein Alkalimetallsalz eines Monoalkylsulfates, ist.

**12.** Stabilisierte Partikel nach Anspruch 11, dadurch gekennzeichnet, daß das anionische Tensid Natriumdodecylsulfat ist.

**13.** Stabilisierte Partikel nach Ansprüchen 8 bis 12, dadurch gekennzeichnet, daß das Beschichtungsmaterial mindestens 2, vorzugsweise mindestens 3 Gew.-% bezogen auf das Gesamtgewicht der umhüllten Partikel beträgt.

**14.** Stabilisiserte Partikel nach Ansprüchen 8 bis 13, dadurch gekennzeichnet, daß in dem Beschichtungsmaterial ein Gewichtsverhältnis von a) dem Alkali- oder Erdalkalimetallsalz der aliphatischen zu b) dem Alkali- oder Erdalkalimetallsalz des anionischen Tensids von 1:2 bis 2:1, vorzugsweise von 1:1,5 bis 1,5:1, vorliegt.

## Claims

**1.** Process for the stabilization of solid peroxo and peroxy compounds, characterized in that solid particles of the peroxo and peroxy compounds, in particular solid particles of sodium percarbonate or of acetyl peroxyborate compounds, are coated by spraying on an aqueous solution or suspension of a coating material and drying, where at least 60% by weight of the coating material consists of a mixture of a) an alkali metal salt or alkaline earth metal salt of an aliphatic carboxylic acid having from 10 to 22 carbon atoms with b) an alkali metal salt or alkaline earth metal salt of an anionic surfactant in a weight ratio of a) to b) in the mixture of from 1:4 to 4:1, wherein the anion of the surfactant satisfies the general formula I

$$R\text{-}A\text{-}B\text{-}SO_3^- \qquad I$$

in which

A is a bond or an aromatic hydrocarbon group having from 6 to 10 carbon atoms which is optionally substituted by $SO_3^-$ radicals or a lower alkyl,
B is a bond or oxygen, and
R is an alkyl radical having from 8 to 18 carbon atoms,

and, if desired, up to at most 40% by weight of the coating material consists of other, customary coating materials and/or auxiliaries customary in alkali metal peroxo salt or acetyl peroxyborate preparation, which are chosen from the group consisting of sodium polyphosphates, sodium polycarboxylates, sodium silicates, phosphonic acids and water-soluble magnesium salts.

**2.** Process according to Claim 1, characterized in that the aliphatic carboxylic acid is a fatty acid having from 12 to 18, preferably having 12 or 18, carbon atoms.

**3.** Process according to Claim 2, characterized in that the aliphatic carboxylic acid is lauric acid or stearic acid and is preferably in the form of the sodium salt.

4. Process according to one of the preceding claims, characterized in that the anionic surfactant is an alkali metal salt of a monoalkylsulphate or of an aliphatic or aromatic sulphonic acid, preferably an alkali metal salt of a monoalkylsulphate.

5. Process according to Claim 4, characterized in that the anionic surfactant is sodium dodecylsulphate.

6. Process according to one of the preceding claims, characterized in that the coating material is at least 2% by weight, preferably at least 3% by weight, based on the total weight of the coated particles.

7. Process according to one of the preceding claims, characterized in that a weight ratio of a) the alkali metal salt or alkaline earth metal salt of the aliphatic carboxylic acid to b) the alkali metal salt or alkaline earth metal salt of the anionic surfactant of from 1:2 to 2:1, preferably from 1:1.5 to 1.5:1, is present in the coating material.

8. Stabilized particles of solid peroxo and peroxy compounds, characterized in that the solid particles of peroxo and peroxy compounds, in particular solid particles of sodium percarbonate or of acetyl peroxyborate compounds, have been coated with a coating material,
at least 60% by weight of which consists of a mixture of a) an alkali metal salt or alkaline earth metal salt of an aliphatic carboxylic acid having from 10 to 22 carbon atoms with b) an alkali metal salt or alkaline earth metal salt of an anionic surfactant in a weight ratio of a) to b) in the mixture of from 1:4 to 4:1, wherein the anion of the surfactant satisfies the general formula I

$$R\text{-}A\text{-}B\text{-}SO_3^- \qquad I$$

in which

A is a bond or an aromatic hydrocarbon group having from 6 to 10 carbon atoms which is optionally substituted by $SO_3^-$ radicals or a lower alkyl,
B is a bond or oxygen, and
R is an alkyl radical having from 8 to 18 carbon atoms,

and, if desired, up to at most 40% by weight of which consists of other, customary coating materials and/or auxiliaries customary in alkali metal peroxo salt or acetyl peroxyborate preparation, which are chosen from the group consisting of sodium polyphosphates, sodium polycarboxylates, sodium silicates, phosphonic acids and water-soluble magnesium salts.

9. Stabilized particles according to Claim 8, characterized in that the aliphatic carboxylic acid is a fatty acid having from 12 to 18, preferably having 12 or 18, carbon atoms.

10. Stabilized particles according to Claim 9, characterized in that the aliphatic carboxylic acid is lauric acid or stearic acid and is preferably in the form of the sodium salt.

11. Stabilized particles according to Claims 8 to 10, characterized in that the anionic surfactant is an alkali metal salt of a monoalkylsulphate or of an aliphatic or aromatic sulphonic acid, preferably an alkali metal salt of a monoalkylsulphate.

12. Stabilized particles according to Claim 11, characterized in that the anionic surfactant is sodium dodecylsulphate.

13. Stabilized particles according to Claims 8 to 12, characterized in that the coating material is at least 2% by weight, preferably at least 3% by weight, based on the total weight of the coated particles.

14. Stabilized particles according to Claims 8 to 13, characterized in that a weight ratio of a) the alkali metal salt or alkaline earth metal salt of the aliphatic carboxylic acid to b) the alkali metal salt or alkaline earth metal salt of the anionic surfactant of from 1:2 to 2:1, preferably from 1:1.5 to 1.5:1, is present in the coating material.

## Revendications

1. Procédé pour la stabilisation de composés peroxo et peroxy solides, caractérisé en ce que des particules solides des composés peroxo et peroxy, en particulier des particules solides de percarbonate de sodium ou de composés

de peroxyborate d'acétyle, sont enrobées par pulvérisation d'une solution aqueuse ou d'une suspension d'un matériau de revêtement et par séchage, le matériau de revêtement étant constitué par au moins 60 % en poids d'un mélange a) d'un sel de métal alcalin ou de métal alcalino-terreux d'un acide carboxylique aliphatique, comprenant 10 à 22 atomes de carbone, avec b) un sel de métal alcalin ou de métal alcalino-terreux d'un agent tensioactif anionique, dans un rapport pondéral entre a) et b) dans le mélange de 1:4 à 4:1, l'anion de l'agent tensioactif correspondant à la formule générale I,

$$R\text{-}A\text{-}B\text{-}SO_3^- \qquad \text{I}$$

dans laquelle

A signifie une liaison ou un groupe hydrocarboné aromatique comportant 6 à 10 atomes de carbone, le cas échéant substitué par des restes $SO_3^-$ou un groupe alkyle inférieur,
B signifie une liaison ou de l'oxygène et
R signifie un reste alkyle comportant 8 à 18 atomes de carbone,

et éventuellement par au plus 40 % en poids d'autres matériaux de revêtement usuels et/ou d'adjuvants usuels dans la production de sels peroxo de métal alcalin tel que le peroxyborate d'acétyle, choisis parmi le groupe des polyphosphates de sodium, des polycarboxylates de sodium, des silicates de sodium, des acides phosphoniques et des sels de magnésium solubles dans l'eau.

**2.** Procédé selon la revendication 1, caractérisé en ce que l'acide carboxylique aliphatique est un acide gras comprenant 12 à 18, de préférence 12 ou 18, atomes de carbone.

**3.** Procédé selon la revendication 2, caractérisé en ce que l'acide carboxylique aliphatique est de l'acide laurique ou de l'acide stéarique et se trouve de préférence sous forme de sel sodique.

**4.** Procédé selon l'une quelconque des revendications précédentes, caractérisé en ce que l'agent tensioactif anionique est un sel de métal alcalin d'un monoalkylsulfate ou d'un acide sulfonique aliphatique ou aromatique, de préférence un sel de métal alcalin d'un monoalkylsulfate.

**5.** Procédé selon la revendication 4, caractérisé en ce que l'agent tensioactif anionique est du dodécylsulfate de sodium.

**6.** Procédé selon l'une quelconque des revendications précédentes, caractérisé en ce que le matériau de revêtement représente au moins 2 % en poids, de préférence au moins 3 % en poids, par rapport au poids total de la particule enrobée.

**7.** Procédé selon l'une quelconque des revendications précédentes, caractérisé en ce que le matériau de revêtement contient un rapport pondéral entre a) le sel de métal alcalin ou de métal alcalino-terreux de l'acide carboxylique aliphatique et b) le sel de métal alcalin ou de métal alcalino-terreux de l'agent tensioactif anionique de 1:2 à 2:1, de préférence de 1:1,5 à 1,5:1.

**8.** Particules stabilisées de composés peroxo et peroxy solides, caractérisées en ce que les particules solides des composés peroxo et peroxy, en particulier les particules solides de percarbonate de sodium ou de composés de peroxyborate d'acétyle, sont enrobées d'un matériau de revêtement qui est constitué par au moins 60 % en poids d'un mélange a) d'un sel de métal alcalin ou de métal alcalino-terreux d'un acide carboxylique aliphatique, comprenant 10 à 22 atomes de carbone, avec b) un sel de métal alcalin ou de métal alcalino-terreux d'un agent tensioactif anionique dans un rapport pondéral entre a) et b) dans le mélange de 1:4 à 4:1, l'anion de l'agent tensioactif correspondant à la formule générale I,

$$R\text{-}A\text{-}B\text{-}SO_3^- \qquad \text{I}$$

dans laquelle

A signifie une liaison ou un groupe hydrocarboné aromatique comprenant 6 à 10 atomes de carbone, le cas échéant substitué par des restes $SO_3^-$ ou un groupe alkyle inférieur,
B signifie une liaison ou de l'oxygène et

R signifie un reste alkyle comprenant 8 à 18 atomes de carbone,

et éventuellement par au plus 40 % en poids d'autres matériaux de revêtement usuels et/ou d'adjuvants usuels dans la production de sels peroxo de métal alcalin tel que le peroxyborate d'acétyle, choisis parmi le groupe des polyphosphates de sodium, des polycarboxylates de sodium, des silicates de sodium, des acides phosphoniques et des sels de magnésium solubles dans l'eau.

**9.** Particules stabilisées selon la revendication 8, caractérisées en ce que l'acide carboxylique aliphatique est un acide gras comprenant 12 à 18, de préférence 12 ou 18, atomes de carbone.

**10.** Particules stabilisées selon la revendication 9, caractérisées en ce que l'acide carboxylique aliphatique est de l'acide laurique ou de l'acide stéarique et se trouve de préférence sous forme de sel sodique.

**11.** Particules stabilisées selon les revendications 8 à 10, caractérisées en ce que l'agent tensioactif anionique est un sel de métal alcalin d'un monoalkylsulfate ou d'un acide sulfonique aliphatique ou aromatique, de préférence un sel de métal alcalin d'un monoalkylsulfate.

**12.** Particules stabilisées selon la revendication 11, caractérisées en ce que l'agent tensioactif anionique est du dodécylsulfate de sodium.

**13.** Particules stabilisées selon les revendications 8 à 12, caractérisées en ce que le matériau de revêtement représente au moins 2 % en poids, de préférence au moins 3 % en poids, par rapport au poids total de la particule enrobée.

**14.** Particules stabilisées selon les revendications 8 à 13, caractérisées en ce que le matériau de revêtement contient un rapport pondéral entre a) le sel de métal alcalin ou de métal alcalino-terreux de l'acide carboxylique aliphatique et b) le sel de métal alcalin ou de métal alcalino-terreux de l'agent tensioactif anionique de 1:2 à 2:1, de préférence de 1:1,5 à 1,5:1.